# EUROPEAN PATENT APPLICATION

(11) **EP 0 602 788 A1**
(43) Date of publication of application: **22.06.1994**
(21) Application number: 93308637.3
(22) Date of filing: 29.10.1993
(51) Int. Cl.: G02B 6/38, G02B 6/42

(54) **Fiber optic connector**

(30) Priority: 15.12.1992 US 990527
(71) Applicant: THE WHITAKER CORPORATION, Wilmington, Delaware 19808 (US)
(72) Inventor: Slaney, Paul, Groton, Massachusetts 01450 (US)
(74) Representative: Warren, Keith Stanley

(57) **Abstract**

A fiber optic connector (30) has a radially inner body (43), for receiving and mounting an optical fiber (86), and a radially outer body (39) having an axial passage (53) receiving the inner body (43). The outer body (39) has forward and rear sections (38, 40) arranged in succession axially of the connector (30). The outer-body rear section (38) mounts a captive bayonet nut (36) for mechanical coupling with an adaptor (22) of an optical device. The forward section (40) of the outer body (39) is arranged for limited axial displacement relative to the rear section (38) of the outer body (39). A first spring (32) biases the inner body (43) axially forwardly relative of the outer body (39), and a second spring (34) biases the forward section (40) of the outer body (39) forwardly relative to the rear section (38) of the outer body (39). When the connector (30) is coupled to the adaptor (22) the rear section (38) of the outer body (39) and bayonet nut (36), transfer to the adaptor (22) tension exerted on the rear of the connector (30), to resist signal interruption.

## Description

This invention relates to a connector for a fiber optic cable, and in particular, to a fiber optic connector for allowing quick connection and disconnection from a fiber optic device and which is resistant to signal interruption.

A fiber optic communication cable typically includes at least one light transmitting optical fiber, which may be of an organic or an inorganic material and which has a cladding of an optically insulating material. Such a cladding protects the fiber, and prevents dispersion of light therefrom. The fiber optic cable usually has a protective external buffer over the clad fiber, typically of a plastic or nylon material, which may, or may not, be removed when the cable is to be terminated. The cable usually also has an outer protective layer, called a jacket, which is typically made up of PVC or polyurethane material. A yarn-like sleeve, typically made of KEVLAR (RTM) polymer, may be disposed between the buffer and the jacket in order to improve the tensile strength of the cable.

The growing use of fiber optic systems has created a need for a connector which is capable of optically coupling a segment of fiber optic cable to another optical device, for example, an amplifier, a diode, or some other active optical component; an optical switch or other optical circuits; or another section of fiber optic cable. In order to achieve efficient light transfer, the connector must align and space the optical elements to be connected, with, or without, touching each other, as may be required, with high precision. The alignment and spacing tolerances may be exceedingly close, because of the minute, micrometresized diameter of the optical facet ends, for example, of optical fibers, to be optically coupled. During light transmission through the coupled facet ends, precise alignment and spacing of the coupled optical elements must be maintained if signal interruption is to be avoided.

One way of avoiding signal interruption is by the use of mating optical connectors that screw together, or are otherwise permanently or semi-permanently secured together. Such connectors do not, however, also allow of quick connection and disconnection from each other.

One optical connector which allows of quick connection and disconnection, has a captive bayonet coupling nut for mating with a bayonet receptacle, a body for supporting an optical fiber along an axis, and a spring. The body has a front end which exposes a facet end of the optical fiber for optical coupling with another optical element. The spring serves two functions; it pushes the facet end forward, towards the optical interface to maintain optical connection, and it pushes against the mating bayonet receptacle to maintain the mechanical coupling between the two bayonet members.

If the back part of the connector body, or an optical cable attached thereto is pulled with sufficient force to compress the spring, the facet end is displaced axially backwards, away from the mating optical element, and signal interruption occurs. Signal interruption can also result from lateral forces applied on the back part of the connector and which displace the facet end of the connector, and thus the facet end of the fiber, laterally, thus causing optical disconnection through fiber misalignment.

The present invention provides a fiber optic connection which allows of quick connection to, and disconnection from, a compatible optical connector, and is yet resistant to signal interruption.

The present invention consists in a fiber optic connector as defined in claim 1.

A fiber optic connector according to an embodiment of the invention has a captive element for mechanical coupling with a further optical connector, and has an inner body, an outer body, and two resilient elements. The connector can be quickly connected to or disconnected from a mating optical connector adaptor; and when connected thereto, it resists signal interruption even if the connector, or the associated optical cable is stressed. The connector inner body has an axially extending through passage for receiving and mounting an optical fiber with selected alignment. The inner body has a front facet end for exposing a facet end of the optical fiber for optical coupling with another optical element. The front facet end is at the front end of the connector. The connector outer body has two axially successive sections. A first, rear section has an axially extending through channel for receiving the inner body, so that the inner body can slide, telescopically and axially, relative to the first section. The rear section also has a mechanism for securing the captive element. A forward second section of the outer body defines the front end of the outer body and is arranged for axial displacement relative to the rear section of the outer body.

The first resilient element biases the inner body axially forward, relative to the outer body to push the facet end of the inner body towards a mating optical element, and the second resilient element biases the front end of the outer body forward section forward relative to the rear section. The forward section of the outer body contacts a surface of the mating adaptor when the connector is mechanically coupled with the mating adaptor.

The outer body forward section is slideably mounted to the rear section of the outer body. The second resilient element is disposed between the outer-body forward and rear sections to bias the forward section forward relative to the rear section. The second resilient element is normally under compression and pushes the outer body first section toward its maximum forward position. When the connector is mechanically coupled with the adaptor, the outer-body forward section is axially displaced rearwardly. This displacement further compresses the second resilient element. The compressive force exerted by the second resilient element is transferred to the mating adaptor to maintain the mechanical coupling between the connector and the adaptor. This resilient force maintains the mechanical coupling because adaptor lugs of the mating adaptor are trapped by a bayonet slot of the captive element.

In another embodiment, the outer-body forward section has a resilient sleeve or collar-like structure fixed to the outer-body rear section. The outer-body forward section compresses or deflects axially when the connector is mechanically coupled with the adaptor, and the resiliency of the forward section provides a resilient force that maintains the mechanical coupling between the connector and the adaptor. In this embodiment, the second resilient element is provided by the resilient structure of the outer-body forward section. The adaptor could be the mating part of any suitable mating fiber optic connector, for example.

Embodiments of the present invention will now be described by way of example with reference to the accompanying drawings in which;
FIGURE 1 is an axial sectional view of a fiber optic connector of the quick connect and disconnect type according to an earlier proposal, when mated with an adaptor;
FIGURE 2 is an axial sectional view of a connector according to an embodiment of the invention, separated from a mating adaptor.
FIGURE 3 is a fragmentary view of a bayonet coupling nut of the connector of FIGURE 2, showing a bayonet slot therein;
FIGURE 4 is an axial sectional view of the connector of FIGURE 2 at an intermediate stage in its mating with the mating adaptor;
FIGURE 5 is a similar view to that of FIGURE 3, showing a lug of the adaptor at an intermediate position in the bayonet slot;
FIGURE 6 is an sectional view of the connector of FIGURE 2 fully mated with an adaptor;
FIGURE 7 is a similar view to that of FIGURE 5 but showing the adaptor lug in its home position in the bayonet slot;
FIGURE 8 is an axial sectional view of the connector of FIGURES 2, 4, and 6 when mated with the adaptor, and being attached a fiber optic cable, and being provided with an environmental seal;
FIGURE 9 is a diagrammatic longitudinal sectional view of a connector according to another embodiment of the invention; and
FIGURE 10 is a view similar to that of FIGURE 9 but showing the connector of FIGURE 9 mated with a mating adaptor.

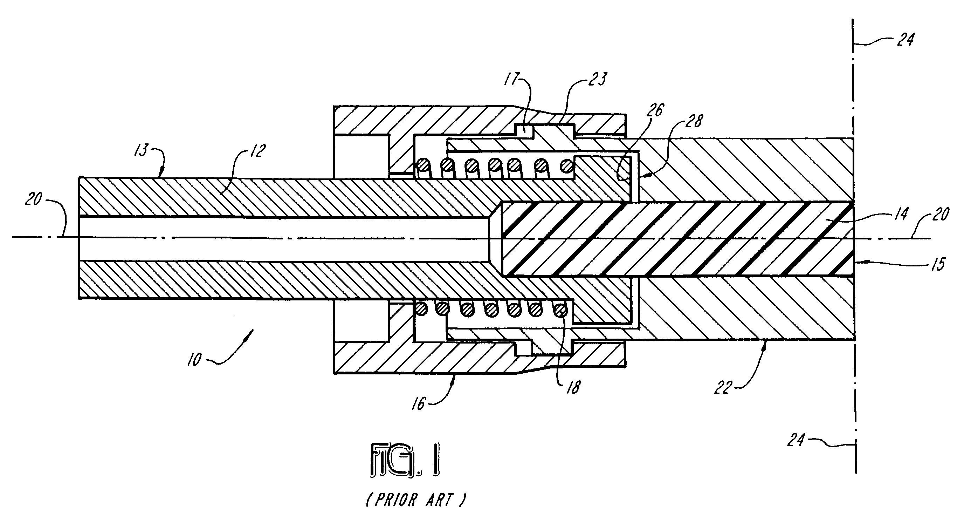

FIGURE 1 shows a quick connect and disconnect bayonet type fiber optic connector 10 according to an earlier proposal mechanically coupled with a mating adaptor 22. The connector has a body 13, a bayonet coupling nut 16, and a spring 18. The body 13 is fabricated with a ferrule 14 and a ferrule holder 12. The body 13 supports an optical fiber along an axis 20 within a central passage extending throughout the length of the connector. The optical fiber terminates in an optical end face or facet at a front facet end 15 of the ferrule 14. A spring 18 biases the body 13 forward (to the right in Figure 1) relative to the bayonet coupling nut 16, so that the facet end 15 is maintained at an optical interface 24. In practice, the optical fiber is optically coupled to another optical element, typically another optical fiber, located on the other side of optical interface 24.

Mechanical coupling, that is to say mating, between the adaptor 22 and the connector 10 is achieved when an adaptor lugs 23 are trapped in slots 17 in the bayonet nut 16. In addition to providing a resilient force that keeps the facet end 15 biased towards the optical interface 24, the compressive force exerted by the spring 18 maintains the mechanical coupling between the adaptor 22 and the connector 10 by maintaining the adaptor lug 23 seated within the bayonet slot 17.

When the connector 10 is coupled with the adaptor 22, the body 13 is displaced rearwards (to the left in Figure 1) from its disconnected position. This displacement occurs because surfaces of the adaptor (not shown) pushes on the facet end 15. The displacement is such that there is normally a space between the surface 26 of the body 13 and the opposed surface 28 of the adaptor 22.

The connector 10 of FIGURE 1 can be subject to inadvertent signal interruption if the facet end 15 is inadvertently displaced rearwards, away from the optical interface 24. Tension on the body 13 sufficient to compress the spring 18 will cause rearward displacement of the end 15 and hence signal interruption. Such tension typically results from tension on the optical cable (not shown) attached to the back end of the body 13. The inadvertent signal interruption because tension anywhere on the body 13, if it is sufficient to compress the spring 18, is transferred to unwanted motion of the facet end 15.

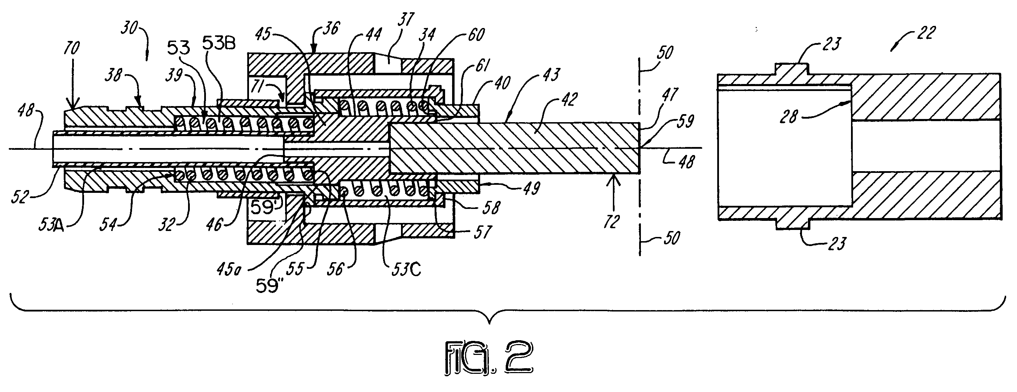

FIGURE 2 shows in axial section, a circular cross section, fiber optic connector 30 according to an embodiment of the invention and which is resistant to inadvertent signal interruption, as described below. The connector 30, shown in FIGURE 2 as being disconnected from adaptor 22, has an inner body 43, an outer body 39, a bayonet-type coupling nut 36, and first and second resilient elements 32 and 34 respectively. As shown, the resilient elements are coil springs. However, the resilient elements may be other than coil springs, being, for example, bellows-like springs attached to the outer body 39.

The outer body 39 has a first section 38 and a second section 40. The first section 38 is tubular with an inner passage 53 for receiving the inner body 43. The inner passage has three axially successive cylindrical compartments 53A, 53B, and 53C, concentric with the longitudinal axis 48 of the connector 30 and each of a different diameter. The middle compartment 53B houses the resilient element 32 which is located radially inwards relative to the other resilient element 34, and the back end of which abuts a radial shoulder 54 formed at the junction of the rear and middle compartments 53A, 53B of the inner passage 53. The forward compartment 53C houses the resilient element 34. A shoulder 56 of the first section 38, at the juncture of the middle and forward compartments, 53B, 53A abuts a back end of the outer resilient element 34. The forward end of the first body section 38 provides an opposing shoulder 58. The outer surface of the first body section 38 traps the bayonet nut 36 between two opposing radial shoulders 59', 59''.

The second section 40 of the connector outer body 39 is a relatively short tubular collar, concentric with the axis 48 and having a cylindrical inner passage that slideably receives a ferrule 42 of the connector inner body 43. The section 40 has a frontal surface 49. The second section 40 accordingly can slide axially relative to the first section 38. The axially back end of the second body section 40 has a radial flange 57 that is slideably received within the forward passage compartment 53C of the first body section 38. The shoulder 58 of the first body section 38 traps the flange 57, to secure the second body section 40 to the first body section 38 and to limit the forward axial movement of the second body section 40. Further, the resilient coil spring element 34 is compressively engaged between the shoulder 56 and the flange 57 resiliently to urge the second body section 40 axially forward, to the extreme forward position of FIGURE 2, relative to the first body section 38.

The ferrule 42 is cylindrical, is concentric with The axis 48 and is secured to a cylindrical ferrule holder 45, concentric with axis 48. The inner-body 43 supports an optical fiber not shown in FIGURE 2 along the axis 48 within a passage 59 extending from the rear of the ferrule holder 45 to a front facet end 47 of the ferrule 42. The ferrule holder 45 has a cylindrical rear stub 46 and a cylindrical forward portion 44 with a larger diameter than the stub 46. The holder 45 defines, at the juncture of the stub 46 and the forward portion 44, a shoulder 55 that abuts a forward end of the inner resilient element 32. A feeder tube 52 is typically attached to the stub 46 and extends to the back of the outer-body first section 38. The diameter of the feeder tube 52 is slightly smaller than the diameter of the inner passage rear compartment 53A of the outer-body first section 38. The diameter of the ferrule holder forward portion 44 is slightly smaller than the diameter of the inner passage middle compartment 53B of outer-body first section 38, thus allowing the inner body 43 to slide axially within the outer-body first section 38. The ferrule 42 has a smaller diameter than the ferrule holder forward portion 44. A rear shoulder 61 of the second outer body section 40, at the juncture of the ferrule 42 and the forward portion 44 abuts an opposing forward shoulder 60 of the outer-body second section 40. The ferrule 42 projects concentrically through the central passage of the outer-body second section 40.

The coil spring constituting the inner resilient element 32 is disposed within the inner cavity middle compartment 53B of first section 38, between the axially opposed shoulders 54 and 55. The resilient element 32 is normally under compression and exerts a force which biases the inner body 43 forward relative to the outer-body first section 38, thus pushing the facet end 47 of the connector forward, towards an optical interface 50. Rearward motion of the inner body 43 is resisted by the force exerted by the first resilient element 32, and forward motion of the inner body 43 is restricted by the abutment of shoulders 60 and 61.

With this structure of the connector 30, the inner body 43 can translate axially relative to the outer body 39, and particularly relative to the outer-body first section 38. This relative axial movement is limited by interfering surfaces namely the shoulders 60 and 61 and is resiliently biased by the inner resilient element 32. In addition, the forward end of the outer-body second section 40 can deflect axially relative to the first section 38, under the resilient bias of the outer resilient element 34 and limited by interfering surfaces, namely the flange 57 and the shoulder 58.

The axial length of the inner body 43, constituted by the holder 45 and the ferrule 42, is sufficient to secure an optical fiber to the connector and to position and support it both axially and radially. The axial length of the outer body 39 is sufficient supportingly to mount the holder 45 of the inner body 43 and to mount and confine the resilient elements 32 and 34. The rearmost, first section 38 of the outer body 39 extends axially over the major portion of the overall length of the body 39, and the foremost second section 40 has considerably less axial length, than the section 38.

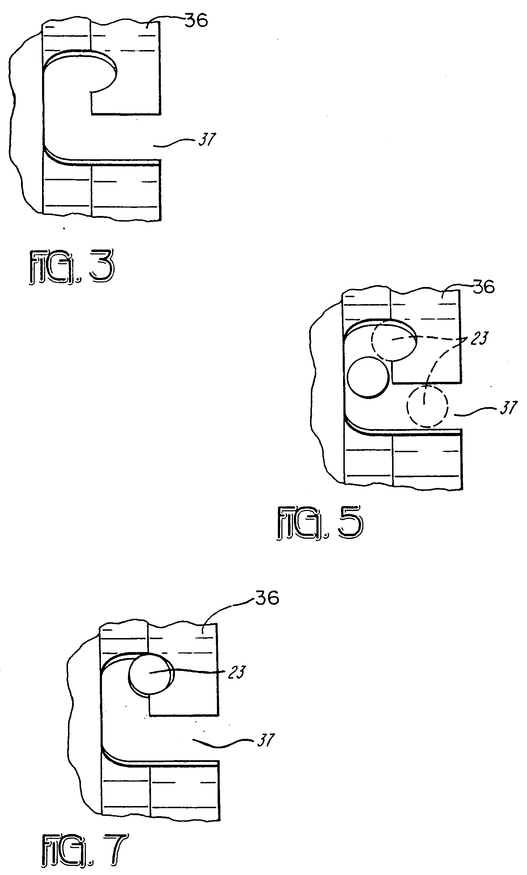

The structure of the bayonet coupling nut 36 is well known in the art. The nut 36 has bayonet slots 37 for receiving and trapping the adaptor lugs 23, as best seen in FIGURE 3.

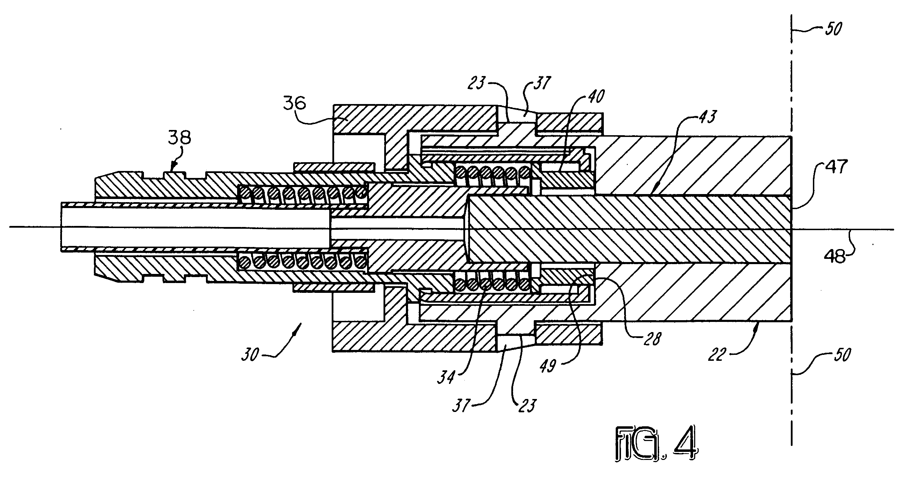

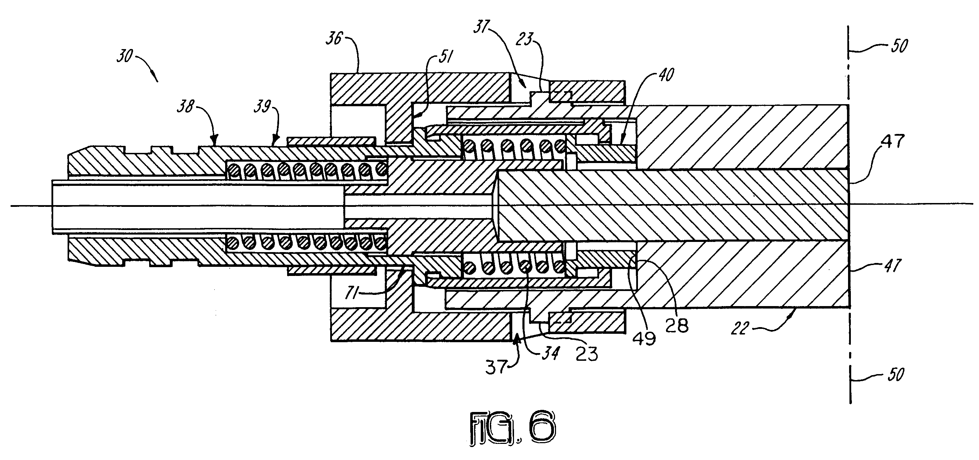

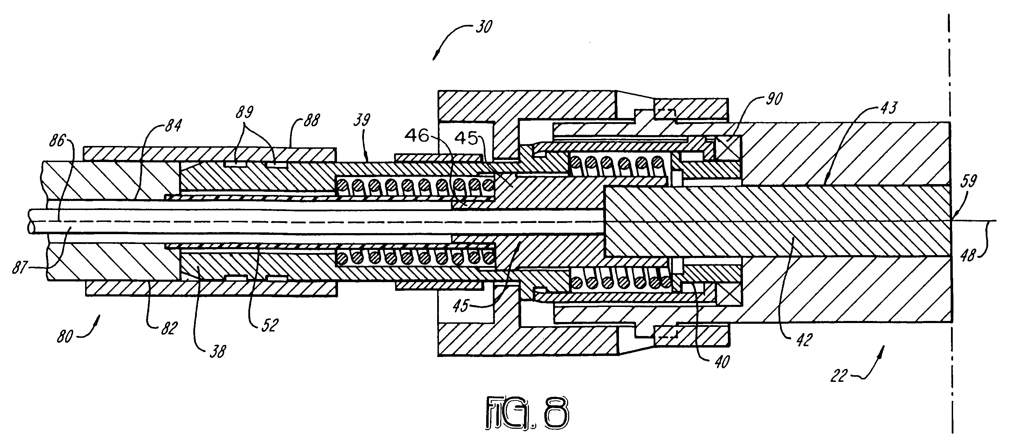

As shown in FIGURES 4 and 6, when the connector 30 is mechanically coupled with, that is to say mated with, the adaptor 22, the frontal surface 49 of the outer-body second section 40 abuts an opposite, radially extending surface 28 of the adaptor 22. FIGURE 4 shows the connector 30 in the process of being mechanically coupled with the adaptor 22. As shown in FIGURE 5 each adaptor lug 23 is at an intermediate position within its bayonet slot 37 after slight rotation of the coupling nut 36, the outer resilient element 34 is maximally compressed, and the outer-body second section 40 is displaced axially to its furthest rearward position.

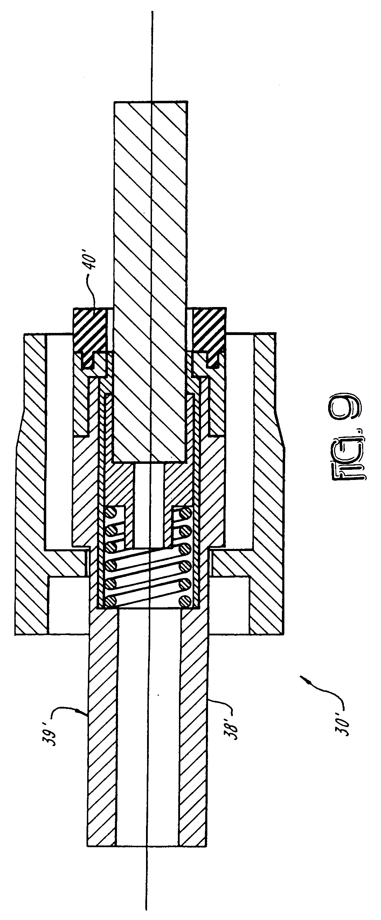

FIGURE 6 shows the connector 30 fully coupled to the adaptor 22. The outer-body second section 40 transfers the force exerted by the resilient element 34 to the adaptor 22, and this force maintains the mechanical coupling because the adaptor lugs 23 are trapped by the bayonet slots 37 (as shown in FIGURE 7) when the nut 36 has been rotated to its home position.

The connector 30 resists signal interruption because, when the connector 30 is coupled to the adaptor 22, the outer-body first section 38 and the coupling nut 36 that it carries, mechanically transfer to the adaptor 22 tension exerted on the rear of the connector, or on an optical cable (not shown) which is attached thereto. The connector structure thereby in essence isolates the tension from the connector facet end 47 and hence from the optical interface 50. The adaptor and the connector outer-body first section 38, with the coupling nut 36, when coupled together, form a rigid structural assembly, rather than multiple pieces coupled by a spring. The connector facet end 47 can be displaced axially backwards by backward displacement of the inner body 39 relative to the outer-body first section 38 in response to compressive engagement exerted on the other side (rightmost in FIGURE 4) of the optical interface, to prevent damage or crushing of the optical elements, but the facet end 47 is not displaced relative to the optical interface 50 in response to tension exerted on the exterior of the connector 10 or the adaptor 22.

As further shown in FIGURE 2, a lateral force applied at the back of the connector 30, i.e., in the direction of vector 70, produces an opposite lateral motion at the facet end 47 in the direction of vector 72. This is true of the previously proposed connector as well as the connector 30. If the lateral motion at the facet end is sufficiently large, signal interruption will result, because the optical fiber will no longer be properly aligned with the mating optical element at the optical interface 50. It is common for connectors to suffer from this kind of signal interruption if the forces are sufficiently large. The connector 30, however, provides improved performance in resisting signal interruption in the presence of lateral forces. The relatively rigid mechanical coupling of the outer-body first section 38 to the bayonet coupling nut 36 via contacting annular sleeves, rather than by a spring as in the connector of FIGURE 1 causes the connector 30 to be more resistant to misalignment from lateral forces. The relatively small lateral play that is possible is compensated for by the resiliently-biased support of the inner body 39.

FIGURE 8 shows the connector 30 attached to an optical cable 80 having a buffer 84 surrounding an optical fiber 86, and a protective jacket 82 covering the buffer.

The optical fiber is secured to the inner body 43, typically with adhesive material such as glue or epoxy resin, within the ferrule-holder 45. The epoxy resin adhesive may be injected into the inner-body passage 59 with a syringe, and then the optical fiber is inserted into the passage along the axis 48. The feeder tube 52 functions as a barrier to prevent the adhesive from leaking or spilling into other parts of the connector. After the adhesive has been applied, the connector 30 is assembled with the cable 80 by threading the fiber 86 into the ferrule holder 45 and inserting the buffer 84 into the feeder tube 52 until it abuts the stub 46 at the back of the inner body 43. The cable jacket 82 is stripped to expose a length of the buffer 84 such that when the end of the buffer 84 abuts the back end of inner body 43, the jacket 82 abuts the back end of the outer body 39 as shown. A yarn-like cable sleeve layer, if present, can then be pulled over the outer body 39. A crimp sleeve 88 is then applied to cover both the optical cable 80 and the rear of the outer-body first section 38 of the connector 30. The crimp sleeve 88 is then crimped over the sleeve layer, the rear of the outer body first section 38, and a portion of the jacket 82.

Figure 8 also illustrates the provision of an optional environmental seal in the connector 30. In this modification, the connector outer body 39 carries an annular seal 90 disposed over the outer-body second section 40. When the connector 30 is mated with the adaptor 22, the seal 90 abuts a radially extending surface 28 of adaptor 22. Such abutment provides an environmental seal for sealing out corrosive agents such as water, dust and the like. It will be apparent that such sealing effect can also be achieved by providing an annular seal, similar to the seal 90 of FIGURE 8, on the adapter 22. Thus, the seal can be provided on either the connector 30 or on the adapter 22. It may also be advantageous to provide such seals on both the connector and on the adapter. Protective seals of this type would far less effective if used with the connector of FIGURE 1 because any tension on the connector would tend to separate the sealing surfaces.

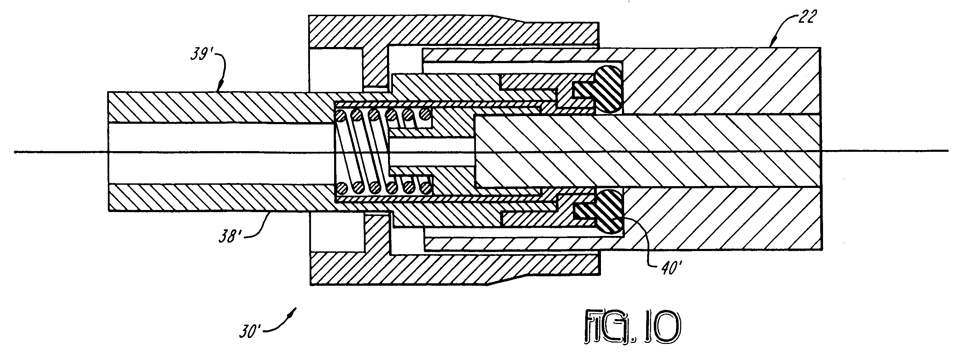

FIGURE 9 shows a connector 30' according to another embodiment of the invention, in which the outer-body second section 40' is constructed to be axially deflectable, and is fixed to the first section of the outer body in contrast to the rigid collar-like structure of the section 40 of FIGURE 2. The section 40' can slide telescopically axially relative to the outer-body first section 38. The connector 30' can be identical with the connector 30 of FIGURE 2, excepting that the outer-body second section 40' is fixedly secured at the forward end of the first section 38', and is resiliently axially collapsible. To this end, the second section 40' can employ a resilient compressive sleeve or, alternatively, a bellows type sleeve or a coil spring. The resiliency of the sleeve provides a resilient force as applied by the outer spring element 34 of the connector 30. The outer-body second section 40' thus both forms part of the connector outer body 39' and also, constitutes the outer resilient element for the connector 30'. The resilient deflection of the outer-body second section 40' can provide sealing engagement with the mated adapter 22, thereby cooperating with, or replacing, the seal 90 of the connector 30 as it is shown in FIGURE 8. FIGURE 10 shows the connector 30' mechanically coupled to the adaptor 22.

## Claims

1. A fiber optic connector (30) for supporting an optical fiber (86) along an axis (48) extending between a front end and a back end of the connector (30), the connector having captive means (36) for mechanically coupling it to an optical device with a front end facet of the optical fiber (86) optically coupled with the optical device, the connector being characterized by; an outer body (39) having a forward section (40) and a rear section (38), arranged in succession axially of the connector (30); an inner body (43) received in the outer body (39) and having an axial passage (59) for supporting the optical fiber (86) with the front end facet thereof exposed for optical coupling with the optical device, the forward section (40) of the outer body (39) being arranged for limited axial displacement relative to the rear section (38) thereof; and by first resilient means (32) for biasing the inner body (43) axially forwardly relative to the outer body (39); and a second resilient means (34) being provided for biasing the front end of the forward section (40) of the outer body (39) forwardly relative to the rear section (38) thereof.

2. A connector (30) as claimed in claim 1, characterized in that the first resilient element comprises a first spring (32) engaged between the inner body (43) and the rear section (38) of the outer body (39) and being normally compressed therebetween.

3. A connector (30) as claimed in claim 1 or 2, characterized in that the forward section of the outer body (39) comprises a tubular collar (40) surrounding the inner body (43) and having a forward face (49) which is engagable to drive the collar (40) rearwardly with respect to the first section (38) of the outer body (39) against the action of the second resilient element (34) which is normally compressed between the tubular collar (40) and the rear section (38) of the outer body (39).

4. A connector (30) as claimed in claim 1, 2 or 3, characterized in that the inner body (43) has a first radial shoulder (60), the forward section (40) of the outer body (39) having a second radial shoulder (16) opposed to the first shoulder (60) for limiting forward axial displacement of the inner body (43).

5. A connector (30) as claimed in any one of the preceding claims, characterized in that the forward section (40) of the outer body (39) is surrounded by an annular seal (90) which is exposed in the axially forward direction of the connector and which is engagable by the rear section (30) of the outer body (39) by rearward movement of said forward section (40) against the action of the second resilient element (34).

6. A connector (30) as claimed in any one of the preceding claims, characterized in that the inner body (43) comprises a forward ferrule (42) at the forward end of which a front end facet of the optical fiber (86) is exposed, the ferrule (42) projecting forwardly from the outer body (39).

7. A connector (30') as claimed in claim 1 or 2, characterized in that the forward section (40') of the outer body (39') comprises a forwardly facing resilient part constituting the second resilient element, the forward section (40') of the outer body (39') being connected to the rear section (38') thereof.

8. A connector as claimed in any one of the preceding claims, in combination with the optical fiber (86) and with an adaptor (22) of said optical device, the adaptor (22) having a channel for receiving a forward part (42) of the inner body (43), and an abutment surface (28) for engagement with the forward section (40) of the outer body (39), the forward section (40) being displaceable rearwardly by the abutment surface (28), against the action of the second resilient element (34) as the forward part (42) of the inner body (43) is received in the channel of the adaptor (22), and the first resilient element (32) urging the front end facet of the optical fiber (86) towards the said optical device as said forward part (42) is received in the channel of the adaptor (22).

9. A connector (30) as claimed in claim 8, characterized in that the forward section (40) of the outer body (39) is surrounded by an annular seal (90) which is engaged between the abutment surface (28) of the adaptor (22) and the front end of the rear section (38) of the outer body (39) when the ferrule (42) is received in the channel of the adaptor (22).

10. A connector (30) as claimed in any one of the preceding claims, characterized by an optical fiber feeder tube (52) received in a rearwardly open channel (53) of the outer body (39), the interior of the tube (52) communicating with said axial passage (54), the feeder tube (52) having a front end fixed to the inner body (43) and a rear end proximate to the back end of the connector (30).
